(19) Europäisches Patentamt
European Patent Office
Office européen des brevets

(11) Veröffentlichungsnummer : **0 677 529 A1**

(12) **EUROPÄISCHE PATENTANMELDUNG**

(21) Anmeldenummer : **95810220.4**

(51) Int. Cl.[6] : **C07F 9/59,** C08K 5/529

(22) Anmeldetag : **04.04.95**

(30) Priorität : **13.04.94 CH 1114/94**

(43) Veröffentlichungstag der Anmeldung :
**18.10.95 Patentblatt 95/42**

(84) Benannte Vertragsstaaten :
**AT BE CH DE ES FR GB IT LI NL SE**

(71) Anmelder : **CIBA-GEIGY AG**
**Klybeckstrasse 141**
**CH-4002 Basel (CH)**

(72) Erfinder : **Pitteloud, Rita, Dr.**
**Sur le Village**
**CH-1724 Praroman (CH)**

(54) **Oligomere Aliphatische HALS-Phosphite und HALS-Phosphonite als Stabilisatoren.**

(57) Es werden neue oligomere Verbindungen der Formel I

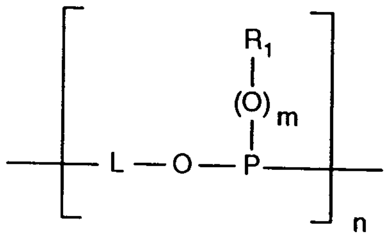

(I)

worin L eine Gruppe der Formel

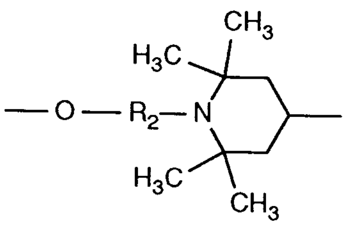

oder

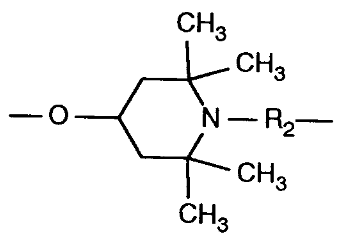

bedeutet, wobei der Sauerstoff in der Gruppe L jeweils an den Phosphor in der wiederkehrenden Struktureinheit und der Rest $R_2$ beziehungsweise der Kohlenstoff in 4-Stellung des Piperidinylrings in der Gruppe L jeweils an den Sauerstoff in der wiederkehrenden Struktureinheit gebunden ist ; und die allgemeinen Symbole wie in Anspruch 1 definiert sind, als Stabilisatoren für organische Materialien gegen oxidativen, thermischen oder lichtinduzierten Abbau beschrieben.

EP 0 677 529 A1

Die vorliegende Erfindung betrifft neue oligomere aliphatische HALS-Phosphite und HALS-Phosphonite, Zusammensetzungen, enthaltend ein organisches Material, bevorzugt ein Polymer, und die neuen oligomeren aliphatischen HALS-Phosphite und HALS-Phosphonite, sowie die Verwendung derselben zum Stabilisieren von organischen Materialien gegen oxidativen, thermischen oder lichtinduzierten Abbau.

Organische Phosphite und Phosphonite sind in der Technik als Costabilisatoren, sekundäre Antioxidantien und Verarbeitungsstabilisatoren, unter anderem für Polyolefine, bekannt; Beispiele für solche bekannten Phosphitstabilisatoren finden sich in R. Gächter/H. Müller (Ed.), Plastics Additives Handbook, 3rd Ed., p. 47, Hanser, München 1990, und EP-A-356 688.

Gehinderte Amine, darunter insbesondere Verbindungen enthaltend 2,2,6,6-Tetramethylpiperidylgruppen, finden bevorzugt Einsatz als Lichtschutzmittel (hindered amine light stabilizers; HALS).

Phosphite oder Phosphonite mit HALS-Strukturelementen werden beispielsweise von T. König al, J. prakt. Chem. 334, 333-349 (1992), in US-A-5 239 076, GB-A-2 247 241, DE-A-4 306 747 und FR-A-2 380 290 beschrieben.

Es besteht weiterhin ein Bedarf an wirksamen Stabilisatoren für organische Materialien, die gegen oxidativen, thermischen und/oder lichtinduzierten Abbau empfindlich sind.

Es wurde nun gefunden, dass eine ausgewählte Gruppe solcher HALS-Phosphite und HALS-Phosphonite sich besonders gut als Stabilisatoren für organische Materialien, die gegen oxidativen, thermischen oder lichtinduzierten Abbau empfindlich sind, eignen. Insbesondere hervorzuheben ist die Eignung der genannten Verbindungen als Verarbeitungsstabilisatoren für synthetische Polymere.

Die vorliegende Erfindung betrifft daher oligomere Verbindungen der Formel I

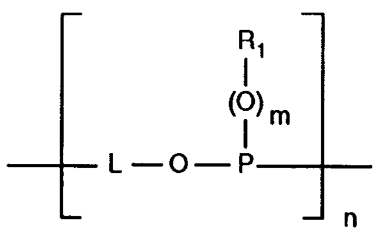 (I)

worin L eine Gruppe der Formel

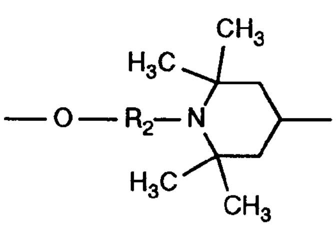 oder 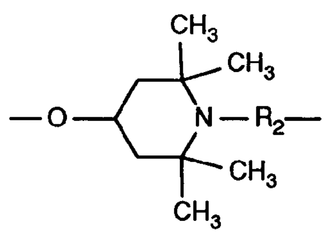

bedeutet, wobei der Sauerstoff in der Gruppe L jeweils an den Phosphor in der wiederkehrenden Struktureinheit und der Rest $R_2$ beziehungsweise der Kohlenstoff in 4-Stellung des Piperidinylrings in der Gruppe L jeweils an den Sauerstoff in der wiederkehrenden Struktureinheit gebunden ist;

$R_1$ $C_1$-$C_{25}$-Alkyl, durch Sauerstoff, Schwefel oder >N-$R_3$ unterbrochenes $C_2$-$C_{25}$-Alkyl; $C_2$-$C_{24}$-Alkenyl, unsubstituiertes oder durch $C_1$-$C_4$-Alkyl substituiertes $C_5$-$C_{15}$-Cycloalkyl; unsubstituiertes oder durch $C_1$-$C_4$-Alkyl substituiertes $C_5$-$C_{15}$-Cycloalkenyl; unsubstituiertes oder am Phenylring durch $C_1$-$C_4$-Alkyl substituiertes $C_7$-$C_9$-Phenylalkyl; oder Tetrahydroabietyl bedeutet,

$R_2$ $C_1$-$C_{18}$-Alkylen, durch Sauerstoff, Schwefel oder >N-$R_3$, unterbrochenes $C_2$-$C_{18}$-Alkylen; $C_4$-$C_8$-Alkenylen oder Phenylethylen darstellt,

$R_3$ Wasserstoff oder $C_1$-$C_8$-Alkyl bedeutet,

m 0 oder 1 ist, und

n eine Zahl von 2 bis 25 darstellt,

wobei in den wiederkehrenden Struktureinheiten der Formel I die Gruppe L, die Reste $R_1$, $R_2$ und $R_3$ sowie die Ziffer m gleich oder verschieden sind.

Alkyl mit bis zu 25 Kohlenstoffatomen bedeutet einen verzweigten oder unverzweigten Rest wie beispielsweise Methyl, Ethyl, Propyl, Isopropyl, n-Butyl, sec-Butyl, Isobutyl, tert-Butyl, 2-Ethylbutyl, n-Pentyl, Isopentyl,

1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl,1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl oder Docosyl. Eine der bevorzugten Bedeutungen von R1 ist beispielweise $C_1$-$C_{18}$-Alkyl, insbesondere $C_1$-$C_{12}$-Alkyl, z.B. $C_1$-$C_8$-Alkyl.

Durch Sauerstoff, Schwefel oder >N-$R_3$ unterbrochenes Alkyl mit 2 bis zu 25 Kohlenstoffatomen kann ein- oder mehrfach unterbrochen sein und bedeutet beispielsweise $CH_3$-O-$CH_2$-, $CH_3$-S-$CH_2$-, $CH_3$-NH-$CH_2$-, $CH_3$-N($CH_3$)-$CH_2$-, $CH_3$-O-$CH_2CH_2$-O-$CH_2$-, $CH_3$-(O-$CH_2CH_2$-$)_2$O-$CH_2$-, $CH_3$-(O-$CH_2CH_2$-$)_3$0-$CH_2$- oder $CH_3$- (O-$CH_2CH_2$-$)_4$O-$CH_2$-.

Alkenyl mit 2 bis 24 Kohlenstoffatomen bedeutet einen verzweigten oder unverzweigten Rest wie beispielsweise Vinyl, Propenyl, 2-Butenyl, 3-Butenyl, Isobutenyl, n-2,4-Pentadienyl, 3-Methyl-2-butenyl, n-2-0ctenyl, n-2-Dodecenyl, iso-Dodecenyl, Oleyl, n-2-0ctadecenyl oder n-4-0ctadecenyl. Bevorzugt ist Alkenyl mit 3 bis 18, insbesondere 3 bis 12 Kohlenstoffatomen.

Unsubstituiertes oder durch $C_1$-$C_4$-Alkyl substituiertes $C_5$-$C_{15}$-Cycloalkyl, insbesondere $C_5$-$C_{12}$-Cycloalkyl, das vorzugsweise 1 bis 3, insbesondere 1 oder 2 verzweigte oder unverzweigte Alkylgruppen-Reste enthält, bedeutet beispielsweise Cyclopentyl, Methylcyclopentyl, Dimethylcyclopentyl, Cyclohexyl, Methylcyclohexyl, Dimethylcyclohexyl, Trimethylcyclohexyl, tert-Butylcyclohexyl, Cycloheptyl, Cyclooctyl oder Cyclododecyl. Bevorzugt ist $C_5$-$C_8$-Cycloalkyl, insbesondere Cyclohexyl.

Unsubstituiertes oder durch $C_1$-$C_4$-Alkyl substituiertes $C_5$-$C_{15}$-Cycloalkenyl, das vorzugsweise 1 bis 3, insbesondere 1 oder 2 verzweigte oder unverzweigte Alkylgruppen-Reste enthält, bedeutet beispielsweise Cyclopentenyl, Methylcyclopentenyl, Dimethylcyclopentenyl, Cyclohexenyl, Methylcyclohexenyl, Dimethylcyclohexenyl, Trimethylcyclohexenyl, tert-Butylcyclohexenyl, Cycloheptenyl, Cyclooctenyl oder Cyclododecenyl. Bevorzugt ist $C_5$-$C_{12}$-Cycloalkenyl, insbesondere $C_5$-$C_8$-Cycloalkenyl, z.B. Cyclohexenyl.

Unsubstituiertes oder am Phenylrest durch $C_1$-$C_4$-Alkyl substituiertes $C_7$-$C_9$-Phenylalkyl, das vorzugsweise 1 bis 3, insbesondere 1 oder 2 verzweigte oder unverzweigte Alkylgruppen-Reste enthält, bedeutet beispielsweise Benzyl, α-Methylbenzyl, α,α-Dimethylbenzyl, 2-Phenylethyl, 2-Methylbenzyl, 3-Methylbenzyl, 4-Methylbenzyl, 2,4-Dimethylbenzyl, 2,6-Dimethylbenzyl oder 4-tert-Butylbenzyl. Benzyl ist bevorzugt.

$C_1$-$C_{18}$-Alkylen bedeutet einen verzweigten oder unverzweigten Rest wie beispielsweise Methylen, Ethylen, Propylen, Tetramethylen, Pentamethylen, Hexamethylen, Heptamethylen, Octamethylen, Decamethylen, Dodecamethylen oder Octadecamethylen. Bevorzugt ist $C_1$-$C_{12}$-Alkylen, insbesondere $C_1$-$C_8$-Alkylen. Eine bevorzugte Bedeutung von $R_2$ ist Ethylen und Propylen.

Durch Sauerstoff, Schwefel oder >N-$R_3$ unterbrochenes $C_2$-$C_{18}$-Alkylen kann ein- oder mehrfach unterbrochen sein und bedeutet beispielsweise -$CH_2$-O-$CH_2$-, -$CH_2$-S-$CH_2$-, -$CH_2$-NH-$CH_2$-, -$CH_2$-N($CH_3$)-$CH_2$-, -$CH_2$-O-$CH_2CH_2$-O-$CH_2$-, -CH2-(O-$CH_2CH_2$-$)_2$O-$CH_2$-, -$CH_2$-(O-$CH_2CH_2$-$)_3$O-$CH_2$-, -$CH_2$-(O-$CH_2CH_2$-$)_4$O-$CH_2$- oder -$CH_2CH_2$-S-$CH_2CH_2$-.

Ist $R_2$ $C_4$-$C_8$-Alkenylen, so handelt es sich beispielsweise um 2-Butenylen-1,4.

In der wiederkehrenden Struktureinheit der Formel I sind die Gruppe L, die Reste $R_1$, $R_2$ und $R_3$ sowie die Ziffer m bevorzugt gleich.

Bevorzugt sind die oligomeren Verbindungen der Formel I, worin
$R_1$$C_1$-$C_{18}$-Alkyl, durch Sauerstoff, Schwefel oder >N-$R_3$ unterbrochenes $C_2$-$C_{18}$-Alkyl; $C_3$-$C_{18}$-Alkenyl, unsubstituiertes oder durch $C_1$-$C_4$-Alkyl substituiertes $C_5$-$C_{12}$-Cycloalkyl; unsubstituiertes oder durch $C_1$-$C_4$-Alkyl substituiertes $C_5$-$C_{12}$-Cycloalkenyl; unsubstituiertes oder am Phenylring durch $C_1$-$C_4$-Alkyl substituiertes $C_7$-$C_9$-Phenylalkyl; oder Tetrahydroabietyl bedeutet.

Bevorzugt sind sind auch die oligomeren Verbindungen der Formel I, worin $R_2$ $C_1$-$C_{12}$-Alkylen, durch Sauerstoff unterbrochenes $C_2$-$C_{12}$-Alkylen; $C_4$-$C_8$-Alkenylen oder Phenylethylen darstellt.

Ebenfalls bevorzugt sind die oligomeren Verbindungen der Formel I, worin $R_2$ Ethylen oder Propylen ist.

Besonders bevorzugt sind die oligomeren Verbindungen der Formel I, worin
$R_1$ $C_1$-$C_{12}$-Alkyl, durch Sauerstoff unterbrochenes $C_2$-$C_{12}$-Alkyl; $C_3$-$C_{12}$-Alkenyl, $C_5$-$C_8$-Cycloalkyl, $C_5$-$C_8$-Cycloalkenyl, $C_7$-$C_9$-Phenylalkyl oder Tetrahydroabietyl bedeutet,
$R_2$ $C_1$-$C_8$-Alkylen oder Phenylethylen darstellt, und
n eine Zahl von 2 bis 15 bedeutet.

Von besonderem Interesse sind die oligomeren Verbindungen der Formel I, worin
$R_1$ $C_1$-$C_{12}$-Alkyl, $C_3$-$C_{12}$-Alkenyl, Cyclohexyl, Benzyl oder Tetrahydroabietyl bedeutet,
$R_2$ Ethylen, Propylen oder Phenylethylen darstellt, und
n eine Zahl von 2 bis 15 bedeutet.

Speziell von besonderem Interesse sind die oligomeren Verbindungen der Formel I, worin
$R_1$ $C_1$-$C_8$-Alkyl, Cyclohexyl oder Tetrahydroabietyl bedeutet,
$R_2$ Ethylen ist, und

n eine Zahl von 2 bis 10 darstellt.

Die erfindungsgemässen oligomeren Verbindungen der Formel I können auf an sich bekannte Weise hergestellt werden.

Ein weiterer Gegenstand der Erfindung ist ein bevorzugtes Verfahren zur Herstellung von oligomeren Verbindungen der Formel I, dadurch gekennzeichnet, dass eine Verbindung der Formel II oder ein Gemisch von Verbindungen der Formel II

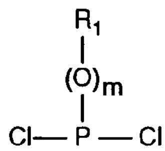 (II)

worin m und $R_1$ die angegebenen Bedeutungen haben, mit einer Verbindung der Formel III oder einem Gemisch von Verbindungen der Formel III

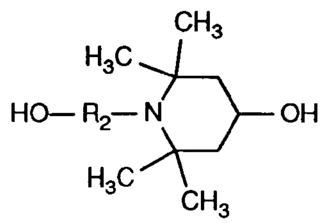 (III)

worin $R_2$ die angegebene Bedeutung hat, umgesetzt wird.

Die Umsetzung erfolgt in der Schmelze oder in Gegenwart eines geeigneten organischen, polaren oder apolaren, aprotischen Lösungsmittels. Bevorzugt geschieht diese Umsetzung in Gegenwart einer Base bei Temperaturen zwischen -20°C und dem Siedepunkt des Lösungsmittels, insbesondere bei Temperaturen zwischen 20 und 150°C.

Basen wie beispielsweise Amine können gleichzeitig auch als Lösungsmittel verwendet werden.

Die Base kann in unterschiedlichen Mengen eingesetzt werden, von katalytischen über stöchiometrische Mengen bis hin zu mehrfachem molarem Überschuß bezüglich eingesetzten Verbindungen der Formel II oder Verbindungen der Formel III. Der bei der Reaktion gebildete Chlorwasserstoff wird gegebenenfalls durch die Base in Chlorid überführt, das durch Filtration und/oder Waschen mit einer geeigneten wässrigen oder festen Phase entfernt werden kann; dabei kann auch ein zweites, nicht mit Wasser mischbares Lösungsmittel eingesetzt werden. Die Isolierung der Produkte erfolgt zweckmäßig durch Eindampfen der organischen Phase und Trocknung des Rückstandes.

Geeignete Lösungsmittel zur Durchführung der Reaktion sind u.a. Kohlenwasserstoffe (beispielsweise Mesitylen, Toluol, Xylol, Hexan, Pentan oder weitere Petroletherfraktionen), halogenierte Kohlenwasserstoffe (beispielsweise Di- oder Trichlormethan, 1,2-Dichlorethan, 1,1,1 -Trichlorethan oder Chlorbenzol), Ether (z.B. Diethylether, Dibutylether oder Tetrahydrofuran), Ketone (z.B. Aceton, Ethylmethylketon, Diethylketon, Methylpropylketon oder Cyclohexanon), ferner Acetonitril, Butylacetat, Dimethylformamid, Dimethylsulfoxid oder N-Methylpyrrolidon.

Geeignete Basen sind u.a. primäre, sekundäre oder vor allem tertiäre Amine (z.B. Trimethylamin, Triethylamin, Tributylamin, N,N-Dimethylanilin, N,N-Diethylanilin oder Pyridin), Hydride (z.B. Lithium-, Natrium-, Kaliumhydrid) oder Alkoholate (z.B. Natriummethanolat).

Werden Hydride (z.B. Natriumhydrid, Natriumborhydrid oder Lithiumaluminiumhydrid), Alkalimetalle, Alkalihydroxide oder Natriummethanolat als Basen verwendet, kann zuerst das entsprechende Alkoholat der Verbindung der Formel III gebildet werden; das gegebenenfalls dabei entstehende Reaktionsprodukt (z.B. Wasser, Methanol) wird vor der Umsetzung mit der Verbindung der Formel II abdestilliert (z.B. als Azeotrop mit Toluol).

Die strukturelle Zusammensetzung der oligomeren Verbindungen der Formel I ist abhängig von den Reaktionsbedingungen, wie beispielsweise dem Lösungsmittel oder der Reaktionstemperatur, sowie dem molaren Mengenverhältnis und der Konzentration der eingesetzten Verbindungen der Formel II und III.

Sowohl die Verbindung der Formel II als auch die Verbindung der Formel m kann in einem molaren Ueberschuss verwendet werden. Bevorzugt wird jedoch das HALS-Diol der Formel III in einem Ueberschuss verwendet. Bevorzugte molare Mengenverhältnisse der Verbindungen der Formel II zu III sind 1,9 : 1 bis 1 : 1,9.

Besonders bevorzugt ist ein molares Mengenverhältnis von 1,05 : 1 bis 1 : 1,8; insbesondere 1 : 1,3 bis 1 : 1,8.

Die vorliegende Erfindung betrifft daher auch oligomere Produkte, erhältlich durch Umsetzung einer Verbindung der Formel II oder eines Gemisches von Verbindungen der Formel II, mit einer Verbindung der Formel III oder einem Gemisch von Verbindungen der Formel III.

Die Herstellung der Verbindungen der Formel II und III ist bekannt.

Die Verbindungen der Formel II, worin m = 1 bedeutet, sind bekannt oder können nach an sich bekannten Verfahren wie sie beispielsweise in DE-A-3 928 291 oder von R.A. Bartlett et al, J. Amer. Chem. Soc. 109 (19), 5699 (1987) beschrieben sind, hergestellt werden.

Die Verbindungen der Formel II, worin m = 0 bedeutet, sind ebenfalls bekannt oder können nach an sich bekannten Verfahren, wie sie beispielsweise in Org. Syntheses Coll. Vol. IV, 784 (1963) oder von Th. Weil et al, Helv. Chim. Acta 1952, 1412 oder F. Nief et al, Tetrahedron 47 (33), 6673 (1991) beschrieben sind, hergestellt werden.

Die für die Herstellung der erfindungsgemässen Verbindungen der Formel I benötigten Verbindungen der Formel II können in Analogie zu den oben erwähnten Literaturvorschriften in situ hergestellt werden und ohne Isolierung mit einer Verbindung der Formel III zu den Verbindungen der Formel I weiter umgesetzt werden.

Die HALS-Verbindungen der Formel III sind bekannt oder können nach an sich bekannten Verfahren, wie sie beispielsweise in US-A-4 233 412 beschrieben sind, hergestellt werden.

In der wiederkehrenden Struktureinheit der Formel I kann L die gleiche oder verschiedene Bedeutungen haben.

Wird die HALS-Verbindung der Formel III im Ueberschuss verwendet, sind wie in Formel IV dargestellt,

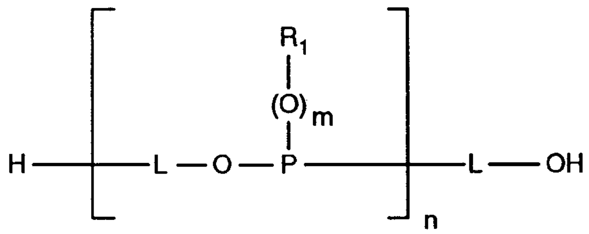

(IV)

die Endgruppen der oligomeren Verbindungen der Formel I vorwiegend Hydroxygruppen, die bei Bedarf leicht nach bekannten Methoden derivatisiert werden können. Diese Hydroxygruppen lassen sich beispielsweise mit Säurehalogeniden, wie beispielsweise Carbonsäurehalogeniden oder Phosphorsäurehalogeniden, oder Säureanhydriden verestern; mit Silylhalogeniden silylieren; mit Alkyl- oder Benzyl-Halogeniden alkylieren bzw. benzylieren; mit Isocyanaten zu den Urethanen umsetzen; mit Isothiocyanaten zu den Thiourethanen derivatisieren; mit Sulfonylhalogeniden und beispielsweise Thionylchlorid zu den Halogeniden umsetzen; oder mit Chorphosphiten wie beispielsweise der Formel V, VI oder VII

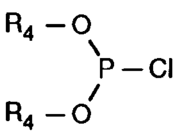

(V)

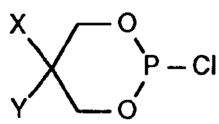

(VI)

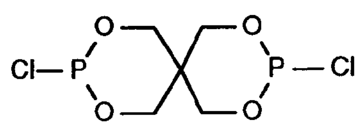

(VII)

zur Reaktion gebracht werden, worin $R_4$ beispielsweise $C_1$-$C_{25}$-Alkyl, unsubstituiertes oder durch $C_1$-$C_4$-Alkyl substituiertes Phenyl; oder $C_7$-$C_9$-Phenylalkyl bedeutet, X und Y unabhängig voneinander Wasserstoff oder $C_1$-$C_4$-Alkyl bedeuten oder zusammen mit dem Kohlenstoffatom, an das sie gebunden sind, einen 3,4-Dehydrocyclohexylidenring bilden,

Durch $C_1$-$C_4$-Alkyl substituiertes Phenyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-butylphenyl, 2-Ethylphenyl oder 2,6-Diethylphenyl.

Wird die Verbindung der Formel II im Ueberschuss verwendet, tragen, wie in den Formeln VIII, IX und X dargestellt,

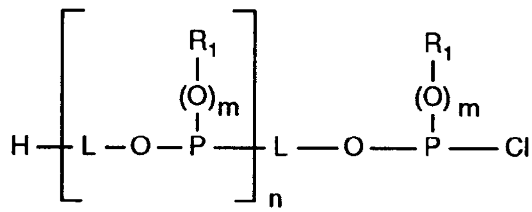

(VIII)

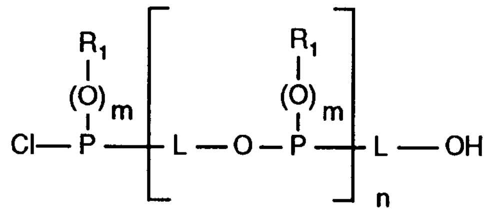

(IX)

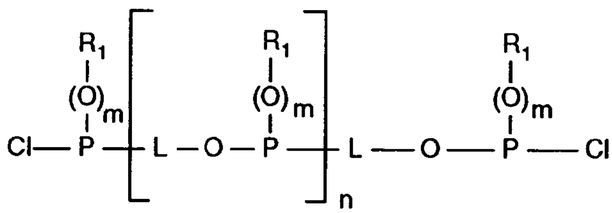

(X)

die Endgruppen der oligomeren Verbindungen der Formel I teilweise noch reaktive

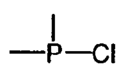

Gruppen. Die Chloratome können nach bekannten Methoden mit zusätzlichen Nukleophilen, wie beispielsweise Phenolen, Alkoholen, Aminen, Mercaptanen oder Dialkylphosphiten unter Abspaltung von Salzsäure substituiert werden. Geeignete Alkohole sind $C_1$-$C_8$-Alkanole wie beispielsweise Methanol, Ethanol, n-Propanol oder n-Butanol.

Die oligomeren Verbindungen der Formel I können auch als Ringsysteme gemäss Formel XI vorliegen,

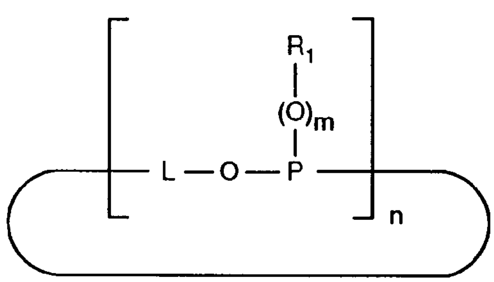

(XI)

bei welchen die Hydroxy-Endgruppe in L mit dem anderen Kettenende

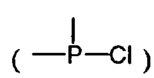

unter Salzsäureabspaltung einen Ring schliesst.

Die vorliegende Erfindung betrifft bevorzugt oligomere Verbindungen der Formel XII

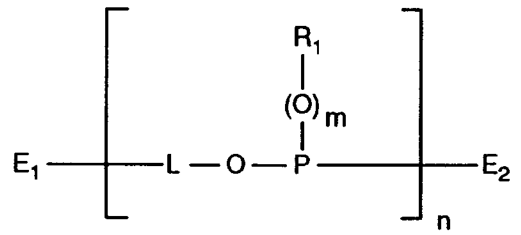

(XII)

worin die Endgruppe $E_1$ Wasserstoff,

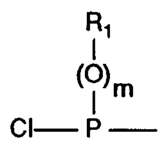

oder

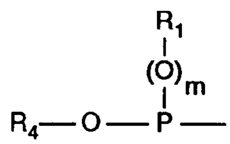

bedeutet; die Endgruppe $E_2$ einen Rest der Formeln -L-OH,

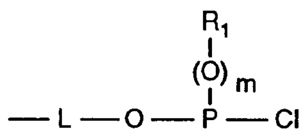

oder

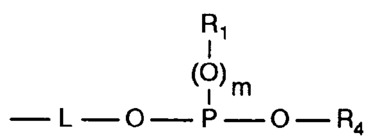

darstellt; oder ferner die Endgruppen $E_1$ und $E_2$ zusammen eine direkte Bindung bilden (cyclische Verbindungen); und $R_4$ $C_1$-$C_8$-Alkyl bedeutet.

Speziell bevorzugt sind solche oligomeren Verbindungen der Formel XII, worin die Endgruppe $E_1$ Wasserstoff, und die Endgruppe $E_2$ einen Rest der Formel -L-OH, worin L die angegebene Bedeutung hat, darstellt.

Die erfindungsgemässen Verbindungen der Formel I eignen sich zum Stabilisieren von organischen Materialien gegen oxidativen, thermischen oder lichtinduzierten Abbau.

Beispiele für derartige Materialien sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).

Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:

a) radikalisch (gewöhnlich bei hohem Druck und hoher Temperatur).

b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder $\pi$- oder $\sigma$-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

4. Kohlenwasserstoffharze (z.B. $C_5$-$C_9$) inklusive hydrierte Modifikationen davon (z.B. Klebrigmacherharze) und Mischungen von Polyalkylenen und Stärke.

5. Polystyrol, Poly-(p-methylstyrol), Poly-($\alpha$-methylstyrol).

6. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

7. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.

8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

9. Polymere, die sich von $\alpha,\beta$-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.

10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-VinylhalogenidCopolymere oder Acrylnitril-Alkylmethacrylat-Butadien-Terpolymere.

11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

12. Homo- und Copolymere von cyclischen Ethern, wie Polyalkylenglykole, Polyethylenoxyd, Polypropylenoxyd oder deren Copolymere mit Bisglycidylethern.

13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

14. Polyphenylenoxide und -sulfide und deren Mischungen mit Styrolpolymeren oder Polyamiden.

15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

17. Polyharnstoffe, Polyimide, Polyamid-imide und Polybenzimidazole.

18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

19. Polycarbonate und Polyestercarbonate.

20. Polysulfone, Polyethersulfone und Polyetherketone.

21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

22. Trocknende und nicht-trocknende Alkydharze.

23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

24. Vernetzbare Acrylharze, die sich von substituierten Acrylsäureestern ableiten, wie z.B. von Epoxyacrylaten, Urethan-acrylaten oder Polyester-acrylaten.

25. Alkydharze, Polyesterharze und Acrylatharze, die mit Melaminharzen, Harnstoffharzen, Polyisocyanaten oder Epoxidharzen vernetzt sind.

26. Vernetzte Epoxidharze, die sich von Polyepoxiden ableiten, z.B. von Bis-glycidylethern oder von cycloaliphatischen Diepoxiden.

27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

30. Wässrige Emulsionen natürlicher oder synthetischer Kautschuke, wie z.B. Naturkautschuk-Latex oder Latices von carboxylierten Styrol-Butadien-Copolymeren.

Weitere Gegenstände der Erfindung sind daher auch Zusammensetzungen enthaltend (a) ein dem oxidativen, thermischen oder lichtinduzierten Abbau unterworfenes organisches Material und (b) mindestens eine oligomere Verbindung der Formel I oder mindestens ein oligomeres Produkt, erhältlich durch Umsetzung einer Verbindung der Formel II oder eines Gemisches von Verbindungen der Formel II, mit einer Verbindung der Formel III oder einem Gemisch von Verbindungen der Formel III.

Vorzugsweise handelt es sich bei den zu schützenden organischen Materialien um natürliche, halbsynthetische oder bevorzugt synthetische organische Materialien. Besonders bevorzugt sind thermoplastische Polymere, insbesondere PVC oder Polyolefine, vor allem Polyethylen und Polypropylen.

Besonders hervorzuheben ist die Wirkung der erfindungsgemässen Verbindungen gegen thermischen

und oxidativen Abbau, vor allem bei thermischer Belastung, wie sie bei der Verarbeitung von Thermoplasten auftritt. Die erfindungsgemässen Verbindungen sind daher hervorragend als Verarbeitungsstabilisatoren einzusetzen.

Vorzugsweise werden die oligomeren Verbindungen der Formel I dem zu stabilisierenden Material in Mengen von 0,01 bis 10 %, beispielsweise 0,01 bis 5 %, vorzugsweise 0,025 bis 3 %, insbesondere 0,025 bis 1 % zugesetzt, bezogen auf das Gewicht des zu stabilisierenden organischen Materials.

Zusätzlich zu den oligomeren Verbindungen der Formel I können die erfindungsgemässen Zusammensetzungen weitere Costabilisatoren enthalten, wie beispielsweise die folgenden:

1.Antioxidantien

1.1.Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec- 1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

1.2. Alkylthiomethyllphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyl-oxyphenol, 2,6-Di-tert-butyl-hydrochinon, 2,5-D-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.

1.4. Tocopherole, z.B. α-Tocopherol, β-Tocopherol, γ-Tocopherol, δ-Tocopherol und Mischungen davon (Vitamin E).

1.5. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.

1.6. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α:-methylbenzyl)4-nonylphenol],2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol),1,1-Bis-(5-tert-butyl-4-hydroxy-2-methylphenyl)butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.

1.7. O-, N- und S-Benzylverbindungen, z.B. 3,5,3',5'-Tetra-tert-butyl-4,4'-dihydroxy-dibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-di-thioterephthalat, Bis-(3,5-di-tert-butyl-4-hydroxybenzyl)-sulfid, Isooctyl-3,5-di-tert-butyl-4-hydroxybenzyl-mercaptoacetat.

1.8. Hydroxybenzylierte Malonate, z. B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.

1.9. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.

1.10. Triazinverbindungen, z.B. 2,4-Bis-octylmercapto-6-(3,5-di-tert-butyl4-hydroxyanilino)- 1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3 5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.

1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

1.13. Ester der β-(3,5-Di-tert-butyl-4-hydroxyphenyl)-propionsäure mit ein- oder mehr wertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.15. Ester der β-(3,5-Dicyclohexyl-4-hydroxyphenyl)-propionsäure mit ein- oder mehr wertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.17. Amide der β-(3,5-Di-tert-butyl-4-hydroxyphenyl)-propionsäure, wie z.B. N,N'-Bis- (3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

2. UV-Absorber und Lichtschutzmittel

2.1.2-(2'-Hydroxyphenyl)-benzotriazole, wie z.B.2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol,2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, Mischung aus 2-(3'-tert-Butyl-2'-hydroxy-5'-(2-octyloxycarbonylethyl)-phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; $[R-CH_2CH_2-COO(CH_2)_3\frac{1}{2}$ mit R = 3'-tert-Butyl-4'-hydroxy-5'-2H-benzotriazol-2-yl-phenyl.

2.2. 2-Hydroxybenzophenone, wie z.B. das 4-Hydroxy-, 4-Methoxy-, 4-0ctoxy-, 4-Decyloxy-, 4-Dodecyloxy-, 4-Benzyloxy-, 4,2',4' -Trihydroxy-, 2'-Hydroxy-4,4'-dimethoxy-Derivat.

2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p- methoxy-zimtsäuremethylester bzw. -butylester, α-Carbomethoxy-p-methoxy-zimtsäure-methylester, N-(β-Carbomethoxy- β-cyanovinyl)- 2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.

2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin,2-[2-hydroxy-4-(2-hydroxy-3-octyloxy-p ropyloxy)phenyl] -4,6-bis(2,4-dimethylphenyl)-1,3,5-triazin.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-di-benz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis- (β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

8. Nukleierungsmittel, wie z.B. 4-tert-Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit.

10. Sonstige Zusätze, wie z.B. Weichmacher, Gleitmittel, Emulgatoren, Pigmente, Optische Aufheller, Flammschutzmittel, Antistatika, Treibmittel.

11. Benzofuranone bzw. Indolinone, wie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis-[5,7-di-tert-butyl-3-(4-[2-hydroxyethoxy]-phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Die Costabilisatoren, mit Ausnahme der unter Punkt 11 aufgeführten Benzofuranone, werden beispielsweise in Konzentrationen von 0,01 bis 10 %, bezogen auf das Gesamtgewicht des zu stabilisierenden Materials, zugesetzt.

Weitere bevorzugte Zusammensetzungen enthalten neben der Komponente (a) und den oligomeren Verbindungen der Formel I noch weitere Additive, insbesondere phenolische Antioxidantien, Lichtschutzmittel oder/und Verarbeitungsstabilisatoren.

Besonders bevorzugte Additive sind phenolische Antioxidantien (Punkt 1 der Liste), sterisch gehinderte Amine (Punkt 2.6 der Liste), Phosphite und Phosphonite (Punkt 4. der Liste) und peroxidzerstörende Verbindungen (Punkt 5. der Liste).

Ebenfalls besonders bevorzugte zusätzliche Additive (Stabilisatoren) sind Benzofuran-2-one, wie sie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 und EP-A-0 591 102 beschrieben werden.

Beispiele für solche Benzofuran-2-one sind Verbindungen der Formel

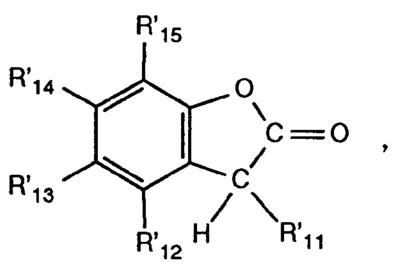

worin

$R'_{11}$ ein unsubstituiertes oder substituiertes carbocyclisches oder heterocyclisches aromatisches Ringsystem bedeutet;

$R'_{12}$ Wasserstoff ist;

$R'_{14}$ Wasserstoff, Alkyl mit 1 bis 12 Kohlenstoffatomen, Cyclopentyl, Cyclohexyl oder Chlor ist;

$R'_{13}$ die Bedeutung von $R'_{12}$ oder $R'_{14}$ hat oder ein Rest der Formel

$$-(CH_2)_s-\overset{\overset{O}{\|}}{C}-OR'_{16},$$

$$-(CH_2)_s-\overset{\overset{O}{\|}}{C}-N(R'_{17})_2,\quad -(CH_2)_s-\overset{\overset{O}{\|}}{C}-O-A-O-\overset{\overset{O}{\|}}{C}-(CH_2)_s-E,$$

$$-(CH_2)_s-\overset{O}{\overset{\|}{C}}-NR'_{18}-A-NR'_{18}-\overset{O}{\overset{\|}{C}}-(CH_2)_s-E\ ,\quad -(CH_2)_s-\overset{O}{\overset{\|}{C}}-NR'_{18}-A-O-\overset{O}{\overset{\|}{C}}-(CH_2)_s-E\ ,$$

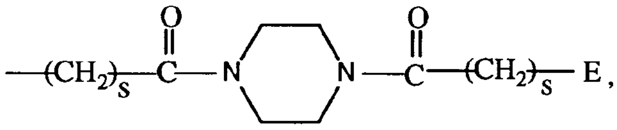

$-CH_2-S-R'_{19}$,

$$-CH(C_6H_5)-\overset{O}{\overset{\|}{C}}-OR'_{16}$$

oder -D-E ist, worin

$R'_{16}$ Wasserstoff, Alkyl mit 1 bis 18 Kohlenstoffatomen, durch Sauerstoff oder Schwefel unterbrochenes Alkyl mit 2 bis 18 Kohlenstoffatomen, Dialkylaminoalkyl mit insgesamt 3 bis 16 Kohlenstoffatomen, Cyclopentyl, Cyclohexyl, Phenyl oder durch 1 bis 3 Alkylreste mit zusammen höchstens 18 Kohlenstoffatomen substituiertes Phenyl ist;

s 0, 1 oder 2 ist;

die Substituenten $R'_{17}$ unabhängig voneinander Wasserstoff, Alkyl mit 1 bis 18 Kohlenstoffatomen, Cyclopentyl, Cyclohexyl, Phenyl, durch 1 oder 2 Alkylreste mit zusammen höchstens 16 Kohlenstoffatomen substituiertes Phenyl, ein Rest der Formel $-C_2H_4OH$, $-C_2H_4-O-C_tH_{2t+1}$ oder

$$-C_2H_4-O-\overset{O}{\overset{\|}{C}}-R'_{20}$$

sind oder zusammen mit dem Stickstoffatom, an das sie gebunden sind, einen Piperidin- oder Morpholinrest bilden;

t 1 bis 18;

$R'_{20}$ Wasserstoff, Alkyl mit 1 bis 22 Kohlenstoffatomen oder Cycloalkyl mit 5 bis 12 Kohlenstoffatomen;

A ein gegebenenfalls durch Stickstoff, Sauerstoff oder Schwefel unterbrochenes Alkylen mit 2 bis 22 Kohlenstoffatomen;

$R'_{18}$ Wasserstoff, Alkyl mit 1 bis 18 Kohlenstoffatomen, Cyclopentyl, Cyclohexyl, Phenyl, durch 1 oder 2 Alkylreste mit zusammen höchstens 16 Kohlenstoffatomen substituiertes Phenyl oder Benzyl;

$R'_{19}$ Alkyl mit 1 bis 18 Kohlenstoffatomen bedeutet;

D -O-, -S-, -SO-, $-SO_2-$ oder $-C(R'_{21})_2-$ ist;

die Substituenten $R'_{21}$ unabhängig voneinander Wasserstoff, $C_1$-$C_{16}$-Alkyl sind, wobei die beiden $R'_{21}$ zusammen 1 bis 16 Kohlenstoffatome enthalten, $R'_{21}$ ferner Phenyl oder einen Rest der Formel

$$-(CH_2)_s-\overset{O}{\overset{\|}{C}}-OR'_{16}\quad \text{oder}\quad -(CH_2)_s-\overset{O}{\overset{\|}{C}}-N(R'_{17})_2$$

ist, worin s, $R'_{16}$ und $R'_{17}$ die oben angegebenen Bedeutungen haben;

E ein Rest der Formel

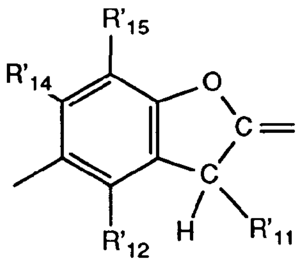

worin $R'_{11}$, $R'_{12}$ und $R'_{14}$ die oben angegebenen Bedeutungen haben; und $R'_{15}$ Wasserstoff, Alkyl mit 1 bis 20 Kohlenstoffatomen, Cyclopentyl, Cyclohexyl, Chlor oder ein Rest der Formel

$$-CH_2-\overset{O}{\overset{\|}{C}}-OR'_{16} \quad \text{oder} \quad -CH_2-\overset{O}{\overset{\|}{C}}-N(R'_{17})_2$$

ist, worin $R'_{16}$ und $R'_{17}$ die oben angegebenen Bedeutungen haben, oder $R'_{15}$ zusammen mit $R'_{14}$ einen Tetramethylenrest bildet.

Bevorzugt sind solche Benzofuran-2-one, in denen $R'_{13}$ Wasserstoff, Alkyl mit 1 bis 12 Kohlenstoffatomen, Cyclopentyl, Cyclohexyl, Chlor oder ein Rest der Formel

$$-(CH_2)_s-\overset{O}{\overset{\|}{C}}-OR'_{16}, \quad -(CH_2)_s-\overset{O}{\overset{\|}{C}}-N(R'_{17})_2$$

oder -D-E ist, worin s, $R'_{16}$, $R'_{17}$, D und E die oben angegebenen Bedeutungen haben, $R'_{16}$ insbesondere die Bedeutung von Wasserstoff, Alkyl mit 1 bis 18 Kohlenstoffatomen, Cyclopentyl oder Cyclohexyl hat.

Bevorzugt sind weiterhin solche Benzofuran-2-one, in denen $R'_{11}$ Phenyl oder durch 1 oder 2 Alkylreste mit zusammen höchstens 12 Kohlenstoffatomen substituiertes Phenyl ist; $R'_{12}$ Wasserstoff; $R'_{14}$ Wasserstoff oder Alkyl mit 1 bis 12 Kohlenstoffatomen ist; $R'_{13}$ Wasserstoff, Alkyl mit 1 bis 12 Kohlenstoffatomen,

$$-(CH_2)_s-\overset{O}{\overset{\|}{C}}-OR'_{16},$$

$$-(CH_2)_s-\overset{O}{\overset{\|}{C}}-N(R'_{17})_2$$

oder -D-E; $R'_{15}$ Wasserstoff, Alkyl mit 1 bis 20 Kohlenstoffatomen,

$$-CH_2-\overset{O}{\overset{\|}{C}}-OR'_{16} \quad \text{oder} \quad -CH_2-\overset{O}{\overset{\|}{C}}-N(R'_{17})_2$$

ist oder $R'_{15}$ zusammen mit $R'_{14}$ einen Tetramethylenrest bildet, wobei s, $R'_{16}$, $R'_{17}$, D und E die zu Anfang angegebenen Bedeutungen haben.

Ebenfalls von besonderem Interesse sind solche Benzofuran-2-one, in denen $R'_{13}$ Wasserstoff, Alkyl mit 1 bis 12 Kohlenstoffatomen oder -D-E ist; $R'_{12}$ und $R'_{14}$ unabhängig voneinander Wasserstoff oder Alkyl mit 1 bis 4 Kohlenstoffatomen sind; und $R'_{15}$ Alkyl mit 1 bis 20 Kohlenstoffatomen ist, wobei D und E die zu Anfang angegebenen Bedeutungen haben.

Ebenfalls von hervorgehobenem Interesse sind schließlich solche Benzofuran-2-one, in denen $R'_{13}$ Alkyl

mit 1 bis 4 Kohlenstoffatomen oder -D-E ist; $R'_{12}$ und $R'_{14}$ Wasserstoff sind; und $R'_{15}$ Alkyl mit 1 bis 4 Kohlenstoffatomen, Cyclopentyl oder Cyclohexyl ist, wobei D eine Gruppe $-C(R'_{21})_2-$ und E ein Rest der Formel

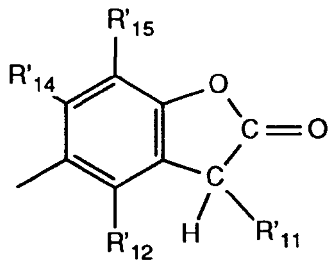

ist, wobei die Substituenten $R'_{21}$ gleich oder verschieden voneinander sind und je Alkyl mit 1 bis 4 Kohlenstoffatomen sind, und $R'_{11}$, $R'_{12}$, $R'_{14}$ und $R'_{15}$ die angegebene Bedeutung haben.

Die Menge an zusätzlich eingesetzten Benzofuran-2-onen, kann in weiten Grenzen schwanken. Beispielsweise können sie zu 0,0001 bis 5, vorzugsweise 0,001 bis 2, insbesondere 0,01 bis 2 Gew.-%, in den erfindungsgemäßen Zusammensetzungen enthalten sein.

Die Einarbeitung der oligomeren Verbindungen der Formel I sowie gegebenenfalls weiterer Additive in das polymere, organische Material erfolgt nach bekannten Methoden, beispielsweise vor oder während der Formgebung oder auch durch Aufbringen der gelösten oder dispergierten Verbindungen auf das polymere, organische Material, gegebenenfalls unter nachträglichem Verdunsten des Lösungsmittels. Die oligomeren Verbindungen der Formel I können auch in Form eines Masterbatches, der diese beispielsweise in einer Konzentration von 2,5 bis 25 Gew.-% enthält, den zu stabilisierenden Materialien zugesetzt werden.

Die oligomeren Verbindungen der Formel I können auch vor oder während der Polymerisation oder vor der Vernetzung zugegeben werden.

Die oligomeren Verbindungen der Formel I können in reiner Form oder in Wachsen, Oelen oder Polymeren verkapselt in das zu stabilisierende Material eingearbeitet werden.

Die oligomeren Verbindungen der Formel I können auch auf das zu stabilisierende Polymer aufgesprüht werden. Sie sind in der Lage, andere Zusätze (z.B. die oben angegebenen herkömmlichen Additive) bzw. deren Schmelzen zu verdünnen, so dass sie auch zusammen mit diesen Zusätzen auf das zu stabilisierende Polymer aufgesprüht werden können. Besonders vorteilhaft ist die Zugabe durch Aufsprühen während der Desaktivierung der Polymerisationskatalysatoren, wobei z.B. der zur Desaktivierung verwendete Dampf zum Versprühen verwendet werden kann.

Bei kugelförmig polymerisierten Polyolefinen kann es z.B. vorteilhaft sein, die oligomeren Verbindungen der Formel I, gegebenenfalls zusammen mit anderen Additiven, durch Aufsprühen zu applizieren.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Wie bereits erwähnt, handelt es sich bei den zu schützenden organischen Materialien vorzugsweise um organische, besonders synthetische, Polymere. Besonders vorteilhaft werden dabei thermoplastische Materialien geschützt, insbesondere Polyolefine. Vor allem ist dabei die ausgezeichnete Wirksamkeit der oligomeren Verbindungen der Formel I als Verarbeitungsstabilisatoren (Hitzestabilisatoren) hervorzuheben. Zu diesem Zweck werden sie vorteilhaft vor oder während der Verarbeitung des Polymeren diesem zugesetzt. Aber auch weitere Polymere (z.B. Elastomere) oder Schmierstoffe bzw. Hydraulikflüssigkeiten können gegen Abbau, z.B. lichtinduzierten oder thermooxidativen Abbau, stabilisiert werden. Elastomere sind der obigen Aufzählung von möglichen organischen Materialien zu entnehmen.

Die in Frage kommenden Schmierstoffe und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in Ullmanns Enzyklopädie der technischen Chemie", Bd. 13, Seiten 85-94 (Verlag Chemie, Weinheim, 1977) beschrieben.

Eine bevorzugte Ausführungsform der vorliegenden Erfindung ist daher die Verwendung von oligomeren Verbindungen der Formel I sowie Produkte, erhältlich durch Umsetzung einer Verbindung der Formel II oder eines Gemisches von Verbindungen der Formel II, mit einer Verbindung der Formel III oder einem Gemisch von Verbindungen der Formel III, zum Stabilisieren von organischen Materialien gegen oxidativen, thermischen oder lichtinduzierten Abbau.

Die erfindungsgemässen oligomeren Verbindungen der Formel I zeichnen sich durch eine ausgeprägt gute

Hydrolysestabilität und ein vorteilhaftes Farbverhalten, d.h. geringe Verfärbung der organischen Materialien während der Verarbeitung, aus.

Organische Materialien, die mit den Verbindungen der vorliegenden Erfindung stabilisiert sind, sind besonders gut vor einem lichtinduzierten Abbau geschützt.

Die vorliegende Erfindung betrifft auch ein Verfahren zum Stabilisieren eines organischen Materials gegen oxidativen, thermischen oder lichtinduzierten Abbau, dadurch gekennzeichnet, daß man diesem mindestens eine oligomere Verbindung der Formel I oder mindestens ein Produkt, erhältlich durch Umsetzung einer Verbindung der Formel II oder eines Gemisches von Verbindungen der Formel II, mit einer Verbindung der Formel III oder einem Gemisch von Verbindungen der Formel III, einverleibt oder auf dieses aufbringt.

Die folgenden Beispiele erläutern die Erfindung weiter. Angaben in Teilen oder Prozenten beziehen sich auf das Gewicht.

Beispiel 1: Herstellung der oligomeren Verbindung (101) (Tabelle 1).

a) Zu einer unter Stickstoff-Atmosphäre gerührten Lösung von 8,93 g (65,0 mMol) Phosphortrichlorid in 40 ml Dichlormethan wird bei Raumtemperatur während 20 Minuten eine Lösung von 4,41 g (50,0 mMol) 2,2-Dimethyl-1-propanol (Neopentylalkohol) in 10 ml Dichlormethan getropft. Das bei der Reaktion entstehende Salzsäuregas wird durch Einleiten in eine verdünnte Natriumhydroxydlösung neutralisiert. Das Reaktionsgemisch wird anschliessend während 2 Stunden unter Rückfluss gekocht. Das Dichlormethan und das überschüssige Phosphortrichlorid wird am Vakuumrotationsverdampfer abdestilliert. Der Rückstand ergibt 8,51 g (90 %) Neopentylphosphorodichloridit welches ohne weitere Reinigung für die nächste Stufe (Beispiel 1b) verwendet wird.

b) Zu einer unter Stickstoff-Atmosphäre gerührten Suspension von 15,40 g (77,0 mMol; 1,7 Aequivalent) N-2'-Hydroxyethyl-4-hydroxy-2,2,6,6-tetramethylpiperidin und 11,38 g (113 mMol; 2,5 Aequivalent) Triethylamin in 200 ml Toluol wird bei Raumtemperatur 8,51 g (45 mMol; 1,0 Aequivalent) Neopentylphosphorodichloridit (Beispiel 1a) getropft. Anschliessend wird das Reaktionsgemisch während 5 Stunden bei 95°C stark gerührt.

Nach dem Abkühlen auf Raumtemperatur wird die weisse Suspension über Celite filtriert und das Filtrat am Vakuumrotationsverdampfer eingeengt. Nach Trocknung des Rückstandes am Hochvakuum werden 8,0 g (56 %) der oligomeren Verbindung (101) (Tabelle 1) als viskoses Oel erhalten.

Mit der Gelpermeationschromatographie (GPC) wird das Gewichtsmittelwerts-Molekulargewicht Mw und das Zahlenmittelwerts-Molekulargewicht Mn bestimmt.

In Analogie zu Beispiel 1 werden aus 9,05 g (45,0 mMol) Cyclohexylphosphorodichloridit und 15,4 g (77,0 mMol) N-2'-Hydroxyethyl-4-hydroxy-2,2,6,6-tetramethylpiperidin, 5,85 g (40 %) der oligomeren Verbindung (102) (Tabelle 1) als viskoses Oel erhalten.

Beispiel 2: Herstellung der oligomeren Verbindung (103) (Tabelle 1).

Zu einer unter Stickstoff-Atmosphäre gerührten Lösung von 6,64 g (33,0 mMol; 1,5 Aequivalent) N-2'-Hydroxyethyl-4-hydroxy-2,2,6,6-tetramethylpiperidin und 5,34 g (53,0 mMol; 2,4 Aequivalent) Triethylamin in 30 ml Toluol wird bei Raumtemperatur eine Lösung von 6,64 g (22,0 mMol; 1,0 Aequivalent) Tetrahydroabietyldichlorphosphit [EP-A- 0 487 036, Beispiele 1, 2 oder 4) in 10 ml Toluol getropft. Anschliessend wird das Reaktionsgemisch während 10 Stunden bei einer Temperatur von 95°C gerührt. Die weisse Suspension wird über Celite filtriert und das Filtrat am Vakuumrotaionsverdampfer eingeengt. Nach Trocknung des Rückstandes am Hochvakuum werden 4,5 g (33 %) der oligomeren Verbindung (103) (Tabelle 1), Smp. 245°C, erhalten.

Beispiel 3: Herstellung der oligomeren Verbindung (104) (Tabelle 1).

Zu einer unter Stickstoff-Atmosphäre gerührten Lösung von 7,25 g (36,0 mMol; 1,7 Aequivalent) N-2'-Hydroxyethyl-4-hydroxy-2,2,6,6-tetramethylpiperidin und 5,34 g (53,0 mMol; 2,5 Aequivalent) Triethylamin in 100 ml Toluol wird bei Raumtemperatur 4 ml (4,56 g, 21,2 mMol; 1,0 Aequivalent) Dichlorooctylphosphin getropft. Anschliessend wird das Reaktionsgemisch während 3 Stunden bei einer Temperatur von 95°C gerührt. Die weisse Suspension wird über Celite filtriert und das Filtrat am Vakuumrotationsverdampfer eingeengt. Nach Trocknung des Rückstandes am Hochvakuum werden 6,9 g (68 %) der oligomeren Verbindung (104) (Tabelle 1) als farbloses Oel erhalten.

Tabelle 1:

| Nr. | Verbindung | $R_2$ in L | Mn | Mw/Mn | Smp. (°C) | % P |
|---|---|---|---|---|---|---|
| 101 | 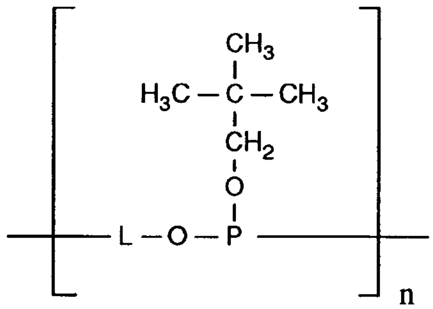 | $-CH_2CH_2-$ | 866 | 2,11 | Oel | 7,59 |
| 102 | 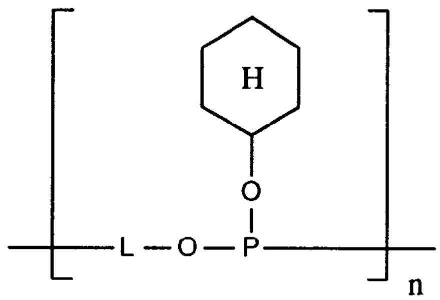 | $-CH_2CH_2-$ | 1087 | 2,56 | Oel | 7,84 |
| 103 | 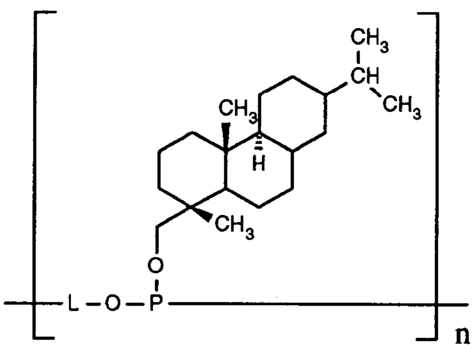 | $-CH_2CH_2-$ | 1499 | 2,3 | 245 | 5,7 |
| 104 | 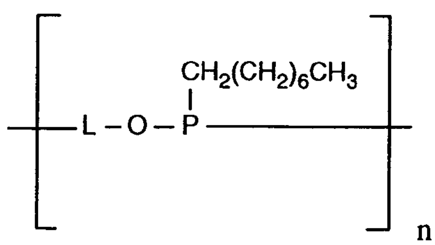 | $-CH_2CH_2-$ | 705 | 1,4 | Oel | 8,11 |

Beispiel 4: Stabilisierung von Polypropylen bei Mehrfachextrusion.

1,3 kg Polypropylenpulver (Profax 6501), das mit 0,025 % Irganox® 1076 (3-[3,5-di-tert-butyl-4-hydroxyphenyl] propionsäure-n-octadecylester) vorstabilisiert wurde, (mit einem bei 230°C und mit 2,16 kg gemessenen Schmelzindex von 3,2) werden gemischt mit 0,05 % Irganox® 1010 (Pentaerythrityl-tetrakis-[3-(3,5-di-tert-butyl-4-hydroxyphenyl)-propionat]), 0,05 % Calciumstearat, 0,03 % Dihydrotalcit [DHT 4A®, Kyowa Chemical Industry Co., Ltd., $Mg_{4.5} Al_2(OH)_{13}CO_3 \bullet 3{,}5\ H_2O$] und 0,05 % der Verbindung aus Tabelle 1. Diese Mischung wird in einem Extruder mit einem Zylinderdurchmesser von 20 mm und einer Länge von 400 mm mit 100 Umdrehungen pro Minute extrudiert, wobei die 3 Heizzonen auf die folgenden Temperaturen eingestellt werden: 260, 270, 280°C. Das Extrudat wird zur Kühlung durch ein Wasserbad gezogen und anschliessend granuliert. Dieses Granulat wird wiederholt extrudiert. Nach 3 Extrusionen wird der Schmelzindex gemessen (bei 230°C mit 2,16 kg). Grosse Zunahme des Schmelzindex bedeutet starken Kettenabbau, also schlechte Stabilisierung. Die Resultate sind in Tabelle 2 zusammengefasst.

Tabelle 2:

| Verbindung aus Tabelle 1 | Schmelzindex nach 3 Extrusionen |
|---|---|
| - | 20,0 |
| 101 | 6,1 |
| 102 | 4,9 |

Beispiel 5: Stabilisierung von Polyethylen während der Verarbeitung.

100 Teile Polyethylenpulver (Lupolen® 5260 Z) werden mit 0,05 Teilen Irganox® 1010 (Pentaerythrityl-tetrakis-[3-(3,5-di-tert-butyl-4-hydroxyphenyl)-propionat]) und 0,1 Teilen Stabilisator aus Tabelle 1 gemischt und in einem Brabender Plastographen bei 220°C und 50 Umdrehungen pro Minute geknetet. Während dieser Zeit wird der Knetwiderstand als Drehmoment kontinuierlich registriert. Im Verlauf der Knetzeit beginnt das Polymere nach längerer Konstanz zu vernetzen, was anhand der raschen Zunahme des Drehmoments festgestellt werden kann. In der Tabelle 3 ist die Zeit bis zur merklichen Zunahme des Drehmoments als Mass der Stabilisatorwirkung angegeben. Je länger diese Zeit ist, desto besser ist die Stabilisatorwirkung.

Tabelle 3:

| Verbindung aus Tabelle 1 | Zeit bis zum Drehmomentanstieg (Min.) |
|---|---|
| - | 5,0 |
| 101 | 15,0 |
| 102 | 13,5 |
| 104 | 14,0 |

**Patentansprüche**

1. Oligomere Verbindungen der Formel I

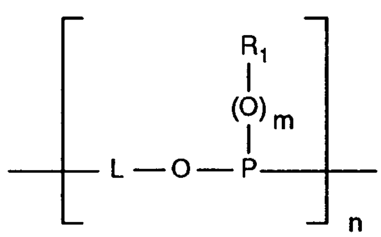

(I)

worin L eine Gruppe der Formel

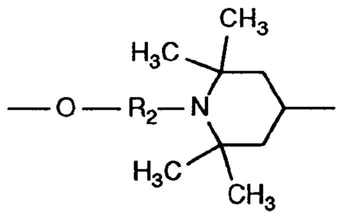 oder 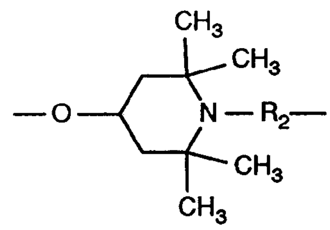

bedeutet, wobei der Sauerstoff in der Gruppe L jeweils an den Phosphor in der wiederkehrenden Struktureinheit und der Rest $R_2$ beziehungsweise der Kohlenstoff in 4-Stellung des Piperidinylrings in der Gruppe L jeweils an den Sauerstoff in der wiederkehrenden Struktureinheit gebunden ist;
$R_1$ $C_1$-$C_{25}$-Alkyl, durch Sauerstoff, Schwefel oder $>N-R_3$ unterbrochenes $C_2$-$C_{25}$-Alkyl; $C_2$-$C_{24}$-Alkenyl, unsubstituiertes oder durch $C_1$-$C_4$-Alkyl substituiertes $C_5$-$C_{15}$-Cycloalkyl; unsubstituiertes oder durch $C_1$-$C_4$-Alkyl substituiertes $C_5$-$C_{15}$-Cycloalkenyl; unsubstituiertes oder am Phenylring durch $C_1$-$C_4$-Alkyl substituiertes $C_7$-$C_9$-Phenylalkyl; oder Tetrahydroabietyl bedeutet,
$R_2$ $C_1$-$C_{18}$-Alkylen, durch Sauerstoff, Schwefel oder $>N-R_3$ unterbrochenes $C_2$-$C_{18}$-Alkylen; $C_4$-$C_8$-Alkenylen oder Phenylethylen darstellt,
$R_3$ Wasserstoff oder $C_1$-$C_8$-Alkyl bedeutet,
m 0 oder 1 ist, und
n eine Zahl von 2 bis 25 darstellt,
wobei in den wiederkehrenden Struktureinheiten der Formel I die Gruppe L, die Reste $R_1$, $R_2$ und $R_3$ sowie die Ziffer m gleich oder verschieden sind.

2. Oligomere Verbindungen gemäss Anspruch 1, worin
$R_1$ $C_1$-$C_{18}$-Alkyl, durch Sauerstoff, Schwefel oder $>N-R_3$ unterbrochenes $C_2$-$C_{18}$-Alkyl; $C_3$-$C_{18}$-Alkenyl, unsubstituiertes oder durch $C_1$-$C_4$-Alkyl substituiertes $C_5$-$C_{12}$-Cycloalkyl; unsubstituiertes oder durch $C_1$-$C_4$-Alkyl substituiertes $C_5$-$C_{12}$-Cycloalkenyl; unsubstituiertes oder am Phenylring durch $C_1$-$C_4$-Alkyl substituiertes $C_7$-$C_9$-Phenylalkyl; oder Tetrahydroabietyl bedeutet.

3. Oligomere Verbindungen gemäss Anspruch 1, worin
$R_2$ $C_1$-$C_{12}$-Alkylen, durch Sauerstoff unterbrochenes $C_2$-$C_{12}$-Alkylen; $C_4$-$C_8$-Alkenylen oder Phenylethylen darstellt.

4. Oligomere Verbindungen gemäss Anspruch 1, worin $R_2$ Ethylen oder Propylen ist.

5. Oligomere Verbindungen gemäss Anspruch 1, worin
$R_1$ $C_1$-$C_{12}$-Alkyl, durch Sauerstoff unterbrochenes $C_2$-$C_{12}$-Alkyl; $C_3$-$C_{12}$-Alkenyl, $C_5$-$C_8$-Cycloalkyl, $C_5$-$C_8$-Cycloalkenyl, $C_7$-$C_9$-Phenylalkyl oder Tetrahydroabietyl bedeutet,
$R_2$ $C_1$-$C_8$-Alkylen oder Phenylethylen darstellt, und
n eine Zahl von 2 bis 15 bedeutet.

6. Oligomere Verbindungen gemäss Anspruch 1, worin
$R_1$ $C_1$-$C_{12}$-Alkyl, $C_3$-$C_{12}$-Alkenyl, Cyclohexyl, Benzyl oder Tetrahydroabietyl bedeutet,
$R_2$ Ethylen, Propylen oder Phenylethylen darstellt, und
n eine Zahl von 2 bis 15 bedeutet.

7. Oligomere Verbindungen gemäss Anspruch 1, worin
$R_1$ $C_1$-$C_8$-Alkyl, Cyclohexyl oder Tetrahydroabietyl bedeutet,
$R_2$ Ethylen ist, und
n eine Zahl von 2 bis 10 darstellt.

8. Verfahren zur Herstellung von oligomeren Verbindungen der Formel I gemäss Anspruch 1, dadurch gekennzeichnet, dass eine Verbindung der Formel II oder ein Gemisch von Verbindungen der Formel II

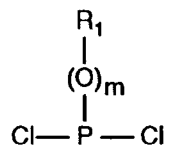 (II)

worin m und $R_1$ wie in Anspruch 1 definiert sind, mit einer Verbindung der Formel III oder einem Gemisch von Verbindungen der Formel III

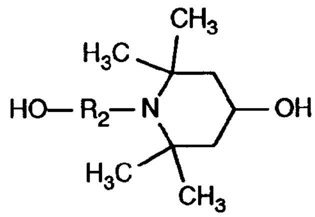 (III)

worin $R_2$ wie in Anspruch 1 definiert ist, umgesetzt wird.

**9.** Oligomere Produkte, erhältlich durch Umsetzung einer Verbindung der Formel II oder eines Gemisches von Verbindungen der Formel II, mit einer Verbindung der Formel m oder einem Gemisch von Verbindungen der Formel III,

(II) 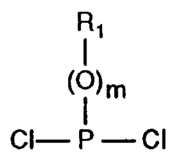 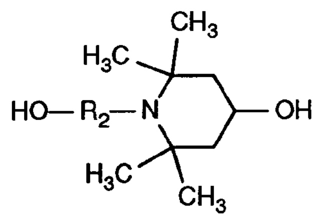 (III)

wobei die Reste $R_1$ und $R_2$ sowie die Ziffer m wie in Anspruch 1 definiert sind.

**10.** Zusammensetzung enthaltend
a) ein dem oxidativen, thermischen oder lichtinduzierten Abbau unterworfenes organisches Material und
b) mindestens eine oligomere Verbindung der Formel I gemäss Anspruch 1, oder mindestens ein oligomeres Produkt gemäss Anspruch 9.

**11.** Zusammensetzung gemäss Anspruch 10, enthaltend neben den Komponenten (a) und (b) zusätzlich weitere Additive.

**12.** Zusammensetzung gemäss Anspruch 11, enthaltend als weitere Additive phenolische Antioxidantien, Lichtschutzmittel oder/und Verarbeitungsstabilisatoren.

**13.** Zusammensetzung gemäss Anspruch 11, enthaltend als weiteres Additiv mindestens eine Verbindung vom Typ der Benzofuran-2-one.

**14.** Zusammensetzung gemäss Anspruch 10, enthaltend als Komponente a) natürliche, halbsynthetische oder synthetische Polymere.

**15.** Zusammensetzung gemäss Anspruch 10, enthaltend als Komponente (a) thermoplastische Polymere.

**16.** Zusammensetzung gemäss Anspruch 10, enthaltend als Komponente (a) ein Polyolefin.

**17.** Zusammensetzung gemäss Anspruch 10, enthaltend als Komponente (a) Polyethylen oder Polypropylen.

**18.** Verwendung der oligomeren Verbindungen der in Anspruch 1 definierten Formel I und Verwendung der in Anspruch 9 definierten oligomeren Produkte als Stabilisatoren für organische Materialien gegen oxidativen, thermischen oder lichtinduzierten Abbau.

**19.** Verwendung gemäß Anspruch 18 als Verarbeitungsstabilisatoren (Thermostabilisatoren) in thermoplastischen Polymeren.

**20.** Verfahren zum Stabilisieren eines organischen Materials gegen oxidativen, thermischen oder lichtinduzierten Abbau, dadurch gekennzeichnet, dass man diesem mindestens eine oligomere Verbindung der in Anspruch 1 definierten Formel I oder mindestens ein oligomeres Produkt gemäss Anspruch 9 einverleibt oder auf dieses aufbringt.

Europäisches Patentamt

# EUROPÄISCHER RECHERCHENBERICHT

Nummer der Anmeldung
EP 95 81 0220

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | EP-A-0 601 973 (CIBA GEIGY AG) 15.Juni 1994<br>the whole document<br>----- | 1-20 | C07F9/59<br>C08K5/529 |

| RECHERCHIERTE SACHGEBIETE (Int.Cl.6) |
|---|
| C08K<br>C07F |

Der vorliegende Recherchenbericht wurde für alle Patentansprüche erstellt

| Recherchenort | Abschlußdatum der Recherche | Prüfer |
|---|---|---|
| DEN HAAG | 31.Juli 1995 | Siemens, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)